# EUROPEAN PATENT SPECIFICATION

(11) **EP 4 264 935 B1**
(45) Date of publication and mention of the grant of the patent: **28.01.2026**
(21) Application number: 21727385.3
(22) Date of filing: 13.05.2021
(51) Int. Cl.: H04N 23/54, H04N 23/957, G02B 27/00, G02B 3/00

(54) **LIGHT-FIELD OPTICAL IMAGE SYSTEM WITH DUAL MODE**
OPTISCHES LICHTFELD-BILDSYSTEM MIT ZWEI BETRIEBSARTEN
SYSTÈME D'IMAGE OPTIQUE À CHAMP LUMINEUX À DOUBLE MODE

(30) Priority: 15.12.2020 ES 202031252
(43) Date of publication of application: 25.10.2023
(73) Proprietor: Photonic Sensors & Algorithms, S.L., 46980 Paterna, Valencia (ES)
(72) Inventor: ALVENTOSA, Francisco, 46980 Paterna - Valencia (ES); BLASCO, Jorge, 46980 Paterna - Valencia (ES); RIBES, Fran, 46980 Paterna - Valencia (ES); MONTOLIU, Carles, 46980 Paterna - Valencia (ES); GRANDIA, Javier, 46980 Paterna - Valencia (ES); VIRGILIO PERINO, Ivan, 46980 Paterna - Valencia (ES); MARTINEZ, Adolfo, 46980 Paterna - Valencia (ES)
(74) Representative: Clarke, Modet y Cía., S.L.
(86) International application number: PCT/EP2021/062775
(87) International publication number: WO 2022/128169

(56) References cited:
- EP-A1- 3 910 929
- KR-A- 20200 086 077
- US-A1- 2013 033 626
- US-A1- 2015 350 499
- US-A1- 2016 182 786
- US-A1- 2016 316 144
- US-A1- 2018 180 836
- CHIOU JIN-CHERN ET AL: "Extending the traveling range with a cascade electrostatic comb-drive actuator", JOURNAL OF MICROMECHANICS AND MICROENGINEERING, vol. 18, no. 1, 1 January 2008 (2008-01-01), GB, pages 15018 - 7, XP055834293, ISSN: 0960-1317, Retrieved from the Internet <URL:https://www.researchgate.net/profile/Jin-Chern-Chiou/publication/228734741_Extending_the_traveling_range_with_a_cascade_electrostatic_comb-drive_actuator/links/004635162867ee6e46000000/Extending-the-traveling-range-with-a-cascade-electrostatic-comb-drive-actuator.pdf> [retrieved on 20210824], DOI: 10.1088/0960-1317/18/1/015018

## Description

### Technical Field

This invention relates to light-field image devices, such as plenoptic cameras, and more particularly to a light-field optical image system that enables to change a camera imaging mode between a light-field mode and a 2D full resolution mode; and the possibility to mechanically focus the image for the 2D full resolution mode or adopt intermediate trade-offs between the light-field mode and the 2D full resolution mode.

### Background Art

Light-field cameras are imaging devices capable of capturing not only spatial information, but also angular information of a scene. This captured information is known as "light field", which can be represented as a four-dimensional function *LF*(*px, py, lx, ly*), where *px* and *py* represent the direction of arrival of the rays to the sensor and *lx, ly* represent the spatial position of the rays.

Light-field information might be captured in different ways. A plenoptic camera is typically formed by an array of microlenses placed in front of an image sensor. Arrays of microlenses are common elements in micro-optical structures whose use is extended in a wide number of applications, especially in the fields of image and illumination. More specifically, a microlens array is placed between the main lens and the sensor. This system is equivalent to capturing the scene from several points of view (the so-called plenoptic views). Another system able to capture a light field can be formed by an array of several cameras. Information acquired by light field cameras allows to compute information about the depths of the different objects (i.e., the distance between the object and the camera) of the scene, the information to compute depth being implicitly captured in the light field. This capability of plenoptic cameras entails a wide number of applications related to the generation of depth maps and 3D imaging.

However, plenoptic cameras have different limitations. As an example, an existing limitation due to the use of microlens arrays which affects the plenoptic camera is the reduction of lateral resolution (the resolution of the plenoptic camera become the resolution of the microlens array, consequently having in mind that there are several pixels per microlens, that resolution is much smaller than the resolution of the sensor). To solve this limitation, it can be useful to be able to switch between a light-field camera mode (or depth-mode) and a full-resolution mode (or 2D imaging mode) when the light-field information is not necessary.

However, once the camera is working in full-resolution mode, it is not possible to compute depth from objects of the real world or to post-process the image for digital autofocusing, as can be done with light-field cameras. The latter problem can be solved by introducing a mechanical autofocus to focus adequately the image over the sensor. Commonly, the autofocus function has been traditionally performed by moving the main lens over the optical axis, closer or further from the sensor.

Document US 2018/180836 A1 discloses a light-field optical system with dual mode (light-field and non-light-field) and focusing, but requires two microlens arrays. US 2016/316144 A1, US 2016/182786 A1, and KR 2020 0086077 A is other relevant prior art.

The present invention solves the aforementioned problems, providing a camera able to

work in both modes, light-field mode and full-resolution mode, and also providing a mechanical focus function (or autofocus) in order to achieve the desired functionality when working in full-resolution mode.

### Summary of Invention

The present invention refers to a light-field optical image system with dual mode, a two-mode camera able to work as both a 2D full resolution camera and a light-field camera.

According to the invention, a focus (or autofocus) function is combined with the two-mode camera. In this case, a two-actuator mechanism is used to (i) change between depth-mode (i.e light-field mode) and full-resolution mode (i.e. 2D imaging mode) and (ii) to focus the image (including autofocus mechanisms). The focus is performed by moving the image sensor and the microlens array whilst keeping the main lens fixed.

The light-field optical image system of the present invention comprises a main lens, a microlens array, an image sensor and a first actuator configured to cause a relative displacement between the image sensor and the microlens array to switch between at least two different optical configurations, said optical configurations including:
- A light-field configuration, in which the image sensor and the microlens array are separated by a first distance that allows the image sensor to capture a light-field image.
- A 2D imaging configuration, in which the image sensor and the microlens array are separated by a second distance, lower than the first distance, that allows the image sensor to avoid the light-field effect.

In an embodiment, the first actuator is configured to cause a relative displacement between the image sensor and the microlens array to switch between two extreme optical configurations (the light-field configuration and the 2D imaging configuration) and one or more intermediate positions (trade-offs) between said extreme configurations, wherein in all the possible intermediate positions the image sensor and the microlens array are separated by a distance comprised between the first distance and the second distance.

In an embodiment, the system further includes a focus function, implemented by means of a second actuator configured to move the image sensor and the microlens array (while maintaining the relative distance thereof unchanged) closer or further to the main lens, in a direction perpendicular to the image sensor. This embodiment provides the following advantages: in the 2D full resolution mode it allows focusing the area of interest of the object world over the image sensor; whereas in the light field mode focusing the area of interest of the object world over the microlens array allows additional applications like for example computing depths of objects around said area of interest.

The first actuator is implemented by a capacitive MEMS actuator. The second actuator is implemented by a thermal MEMS actuator or a plurality of piezoelectric cantilever beams.

The first actuator is preferably configured to move a first element in a direction perpendicular to the image sensor, the first element being the image sensor or the microlens array.

In an embodiment, the first actuator may comprise a moving part attached to the first element and a fixed part attached to a second element, the second element being the image sensor or the microlens array, the second element being different from the first element. The first actuator may be implemented as a capacitive MEMS actuator, and preferably a comb-drive actuator. The first actuator may comprise at least one restoring spring configured to guide the movement of the first element, and restore the first element to an initial position, relative to the second element, when the first actuator is not activated.

In another example, the first actuator is a thermal MEMS actuator including a base for supporting the first element, and a plurality of holders connecting two opposite sides of the base with anchors, the holders made of a material that expands with heat and forming an angle with respect to the base such that a current driven through the anchors generates a thermal expansion of the holders that moves the first element in the direction perpendicular to the image sensor.

In yet another example, the first actuator comprises a plurality of piezoelectric cantilever beams, each piezoelectric cantilever beam comprising a first blade fixed to a frame at a first end and a first load fixed to a second end of the first blade, wherein the first blade comprises a piezoelectric layer electrically connected to the frame, a passive layer on top of the piezoelectric layer and a layer of metallic material deposited over the passive layer on a region at the second end of the first blade, wherein the first load is connected to the first element such that a voltage applied to the piezoelectric layer causes a movement of the first element in the direction perpendicular to the image sensor. Each piezoelectric cantilever beam of the first actuator may comprise a second blade fixed to the first load at a first end, and a second load fixed to a second end of the second blade and connected to the first element. The first actuator preferably comprises four piezoelectric cantilever beams contacting each side of the first element.

In yet another embodiment, the first actuator comprises at least one capacitive MEMS actuator connected to the first element, and at least one restoring spring configured to guide the movement of the first element and restore the first element to an initial position when the first actuator is not activated. The first actuator may comprise a plurality of capacitive MEMS actuators connected in series by restoring springs.

The second actuator may be implemented as any of the embodiments described for the first actuator: a thermal MEMS actuator, one or more piezoelectric cantilever beams.

The present invention also refers to a plenoptic camera including the light-field optical image system.

### Brief Description of Drawings

The drawings attached illustrate several embodiments. Together with the description, they allow to explain the principles of the embodiments of the present invention.
Figure 1 is a schematic drawing depicting the basic elements of typical light-field cameras known in the prior art.
Figures 2A and 2B represent block diagrams depicting the main elements, including a first actuator (Figure 2A) and a second actuator (Figure 2B), of a light-field optical image system according to different embodiments of the present invention.
Figure 3 depicts a schematic representation of the switch between a light-field configuration and a 2D imaging configuration using the first actuator.
Figure 4 depicts a schematic representation of the displacement of the microlens array and the image sensor produced by the second actuator to achieve focus.
Figures 5A-5C show an embodiment of the first actuator using a capacitive MEMS actuator, and in particular a comb-drive actuator.
Figures 6A-6B show an embodiment of the system using a comb-drive actuator as the first actuator and a thermal MEMS actuator as the second actuator.
Figures 7A-7C show an embodiment of the system using a comb-drive actuator as the first actuator and a piezoelectric MEMS actuator as the second actuator.
Figures 8A-8B show the details of the piezoelectric MEMS actuator of Figures 7A-7C.
Figure 9 shows the embodiment of a two-actuator mechanism for achieving focus and switching camera modes based only on capacitive MEMS actuators.
Figure 10 represents a block diagram of a plenoptic camera according to an embodiment.

### Detailed description

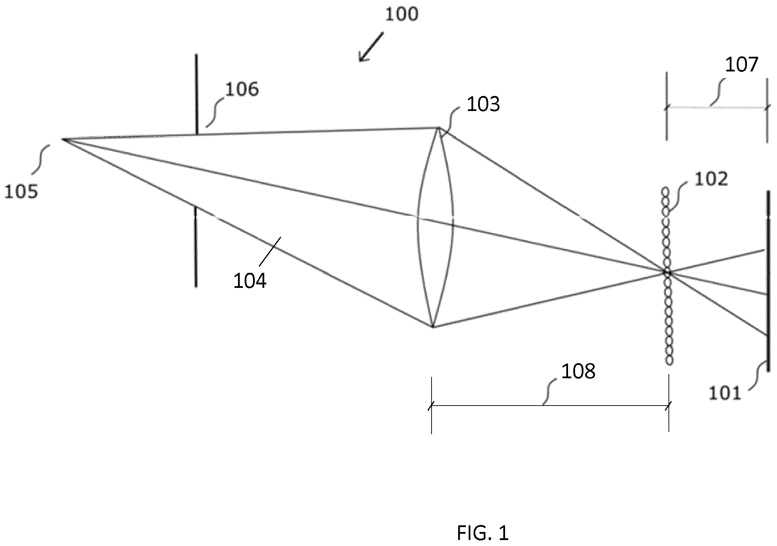

Referring to **Figure 1****,** a schematic view of a typical light-field camera 100 is depicted. The schematic view shows the main elements forming part of the optical image system of a light-field camera 100 according to the prior art: an image sensor 101, a microlens array 102 and a main lens 103. The main lens 103 captures incoming light rays 104 coming from an object 105 entering through an aperture 106 and focused by the main lens 103. The microlens array 102 is placed between the image sensor 101 and the main lens 103 at a distance 107 from the image sensor 101 suitable to capture a light-field image, said distance 107 normally corresponding to the focal length of the lenslets of the microlens array 102. The diagram also depicts the distance 108 between the main lens 103 and the microlens array 102, normally corresponding to the focal length of the main lens 103.

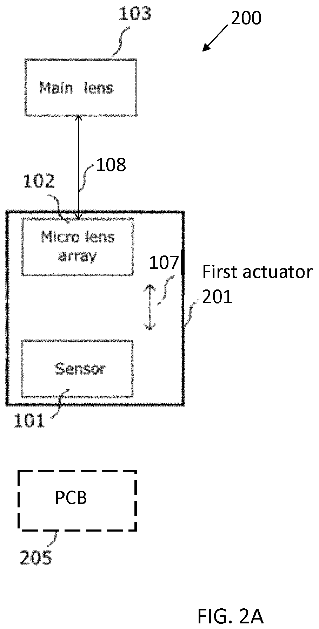

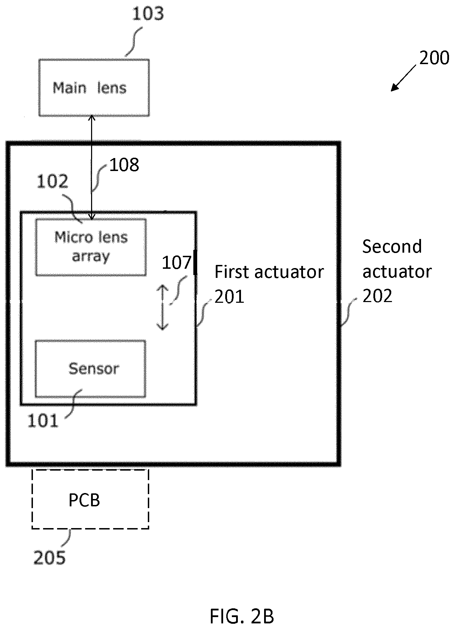

**Figure 2A** represents a block diagram with the main elements of a light-field optical image system 200 (or light-field camera). In addition to the main lens 103, the microlens array 102, and the image sensor 101, the light-field optical image system 200 of the present invention includes a first actuator 201. In Figure 2B the system 200 further comprises a second actuator 202.

Figures 2A and 2B also depict a PCB 205 (represented in dotted lines, since it may be part of the system 200 or an element external to the system 200) configured for receiving and processing the data acquired by the image sensor 101, for example to be processed for display of images or depth maps in a screen of a mobile phone. Any type of image sensor 101 can be used, for example a CIS (CMOS Image Sensor) or a CCD, that may be connected to the imaging system processing the acquired data by any suitable interconnection system, as for example the PCB 205, using wire bonding or any other suitable means for electrical connection between the image sensor 101 and the PCB 205. Instead of a PCB 205, a ceramic substrate or any other electrical interconnection technology with the imaging system can be used. The PCB 205 may include a connector that can, for example, be plugged in the mother board of a mobile phone or a laptop.

The first actuator 201 causes a relative displacement between the image sensor 101 and the microlens array 102. By modifying the distance 107 between said elements, the first actuator 201 is configured to switch between two different optical configurations, a light-field configuration and a 2D imaging configuration, so that the first actuator 201 can also be referred to as a 2-mode actuator.

In a light-field configuration, the image sensor 101 and the microlens array 102 are separated by a first distance that allows the image sensor to capture a light-field image, thereby working as a light-field camera 100 of Figure 1, the first distance normally being about the focal length of every one of the small lenslets of the microlens array 102 for the system to operate in a full light-field mode. The range of the distance 107 in the light-field configuration normally depends on the focal length of the lenslets of the microlens array 102, being as small as a few microns in a small camera for mobile devices or several millimeters or even larger in large cameras for astronomy or cinema applications.

In a 2D imaging configuration (or full-resolution mode) the image sensor 101 and the microlens array 102 are separated by a second distance, lower than the first distance, that allows the image sensor to avoid the light-field effect. In the 2D imaging configuration, the image sensor and the microlens array are in contact or separated by a distance comprised within an infinitesimal range, within the range of 0-1 µm. In the embodiment of Figure 2B the second actuator 202 is configured to move both the image sensor 101 and the microlens array 102 in a direction perpendicular to the image sensor 101, while maintaining the relative distance 107 between the microlens array 102 and the image sensor 101 unchanged, thereby modifying the distance 108 between the main lens 103 and the microlens array 102. The second actuator 202 works as a focus actuator that enables to implement the focus or autofocus function by increasing or decreasing the relative distance between the main lens 103 and the microlens array 102, the latter being in turn extremely close to the image sensor 101 when the system 200 is working on the 2D imaging configuration.

The light-field optical image system 200 of the present invention can operate in two different optical configurations by adjusting the distance 107 between the image sensor 101 and the microlens array 102. For instance, moving the image sensor 101 closer to the microlens array 102 reduces the amount of light-field data obtained and increases the lateral resolution of the camera.

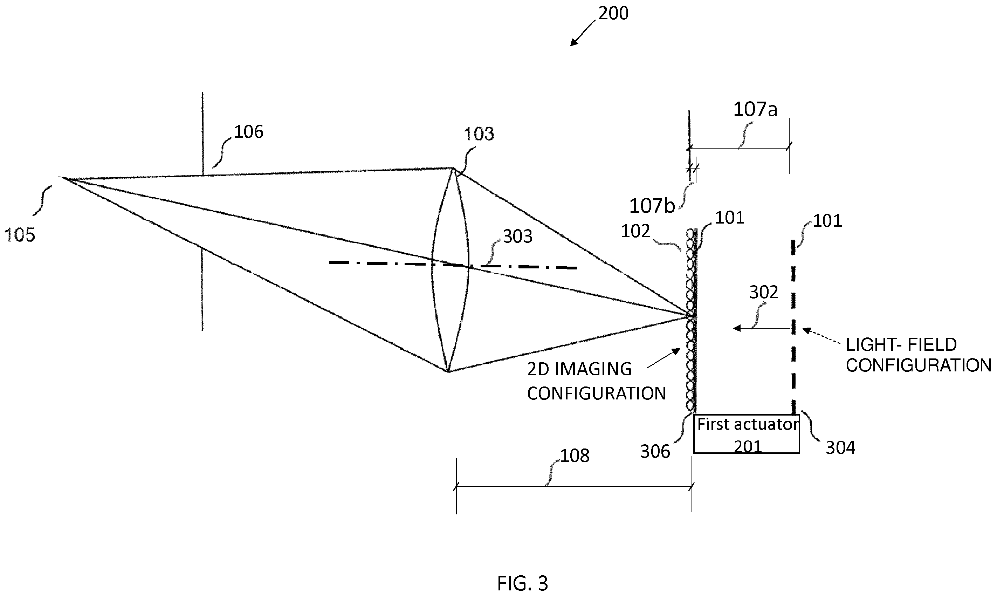

According to an embodiment depicted in the schematic representation of **Figure 3****,** the alternation between a light-field configuration and a 2D imaging configuration on the same device is accomplished by moving the image sensor 101 relative to the microlens array 102, in a direction 302 perpendicular to the image sensor 101, said direction 302 being normally parallel to the optical axis 303 of the main lens 103 (the direction 302 may however be not parallel to the optical axis 303 when folded optics is employed). In the example of Figure 3, the first actuator 201 moves the image sensor 101 from a first position 304 to a second position 306 closer to the microlens array 102, placed at a distance close enough (in contact or almost in contact) to reduce the quantity of light field information close to zero and operate in a 2D imaging configuration. The first position 304 of the image sensor 101, depicted with a dotted line, corresponds to the light-field configuration in which the image sensor 101 is positioned at a first distance 107a from the microlens array 102 and the system works as a light-field camera. The second position 306 of the image sensor 101 corresponds to the 2D imaging configuration, in which the image sensor 101 is separated by a second distance 107b, lower than the first distance 107a, from the microlens array 102. The second distance 107b is zero or close to 0 (at least lower than 1 µm), such that there is no space for the light beam to be refracted and the system 200 works as a 2D full-resolution camera.

The switching between the two optical configurations can be accomplished, for example but not limited to, by using an actuator assembly (first actuator 201) able to induce a relative motion, along the perpendicular axis of the image sensor 101, between the image sensor 101 and the microlens array 102. In an embodiment, the first actuator 201 is configured to move a first element in a direction 302 perpendicular to the image sensor 101, wherein the first element is the image sensor 101 or the microlens array 102, i.e. the first actuator 201 can be configured to move the image sensor 101, as depicted in the example of Figure 3, the microlens array 102 or both, in order to generate a relative displacement between both elements.

In a particular embodiment, but not as a mandatory restriction, the first actuator 201 works on a binary way, alternating between two different relative positions between the image sensor 101 and the microlens array 102. In the first position 304, the distance 107 between said elements encompasses the necessary length to work as a plenoptic camera; whereas in the second position 306 the image sensor 101 is extremely close (or even in contact) to the microlens array 102, avoiding the depth-camera mode (or light-field camera mode) and taking the structure into a full-resolution camera mode. In other embodiments, the first actuator 201 may be configured to adjust the distance 107 between the image sensor 101 and the microlens array 102 in more than two different positions (e.g. by using a linear actuator that allows continuous and precise displacement of the image sensor 101 or the microlens array 102 in the direction 302 perpendicular to the image sensor 101 and to the microlens array 102).

When a light-field camera is working on a light-field configuration, it is possible to re-focus the image after it has been acquired. When the same camera is operating as a 2D full resolution camera, it is not possible to re-focus the image afterwards. In this case the present invention employs, according to the embodiment of Figure 2B, a second actuator 202 to perform a second relative displacement between the microlens array 102 (and the image sensor 101 fixed at a given distance of the microlens array 102) and the main lens 103 in order to have a fully functional camera able to obtain focused photos with full resolution.

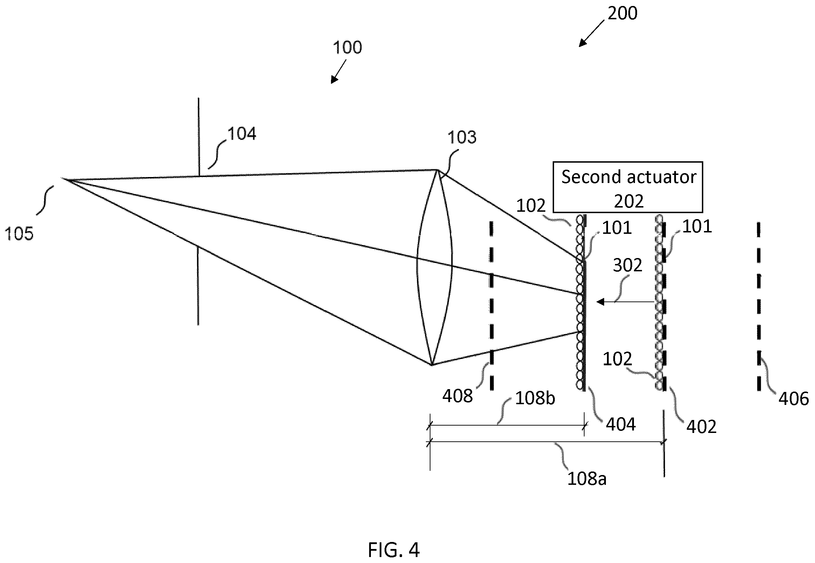

**Figure 4** shows, in a schematic view, the displacement of a set formed by the microlens array 102 and the image sensor 101 performed by the second actuator 202 in order to achieve focus (or autofocus), mainly but not exclusively when the system 200 is working in 2D imaging configuration; however, the second actuator 202 may be configured to apply focus when in light-field configuration (for example to change the range of depths being acquired: distances very near to the camera, medium distances, far distances, etc.). This displacement must be enough to reach the focus of any object 105 the system 200 may capture. This displacement is enabled by a second actuator 202 which must guarantee a range of motion of, at least, 300µm (typical focusing displacements needed in auto-focus actuators of mobile phone cameras such as voice coil motors). As depicted in Figure 4, the second actuator 202 moves the microlens array 102 and the image sensor 101, which in the example are arranged in a 2D imaging configuration, from a first position 402 to a second position 404. In the first position 402, in which the image sensor 101 is depicted with a dotted line, the microlens array 102 is positioned at a first distance 108a from the main lens 103, whilst in the second position 404 the microlens array 102 is positioned at a second distance 108b from the main lens 103. This displacement is normally performed by the second actuator 202 so that the image captured by the image sensor 101 is focused. The extreme positions (406, 408) that this displacement allows the microlens array 102 and image sensor 101 to reach are represented by dotted vertical lines. The distance between said extreme positions (406, 408) depend on the focus function of the camera.

First 201 and second 202 actuators may be embodied in different ways. Both movements performed by these actuators may be even embodied with a single mechanical system. The switch between both modes (light-field mode and full-resolution mode) can be carried out, for instance, by displacing a first element using the first actuator 201 in a direction perpendicular to the image sensor, the first element being either the image sensor 101 or the microlens array 102. In an embodiment, the first actuator 201 comprises a moving part attached to the first element and a fixed part attached to a second element, wherein the second element is either the image sensor or the microlens array and wherein the second element is different from the first element (i.e. if the first element is the microlens array 102, then the second element is the image sensor 101, and vice versa). The first actuator 201 may be, for example but not limited to, a MEMS actuator.

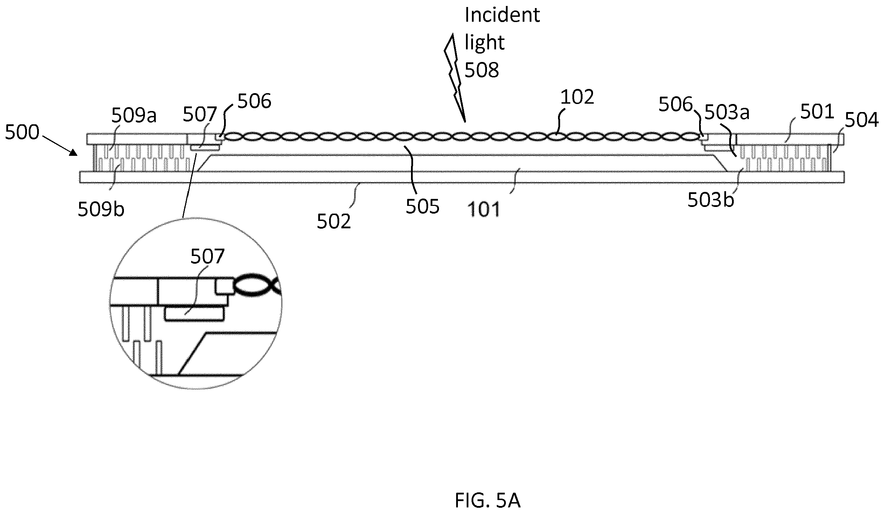

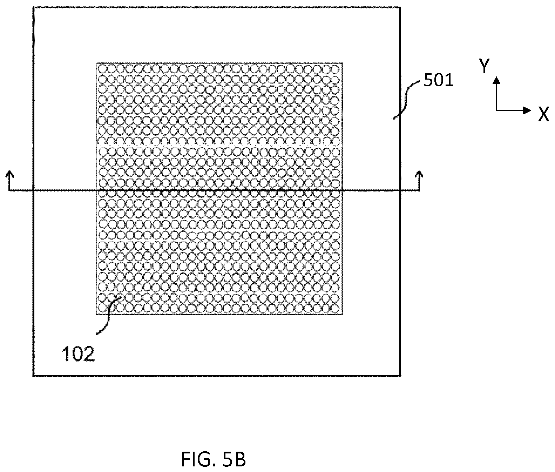

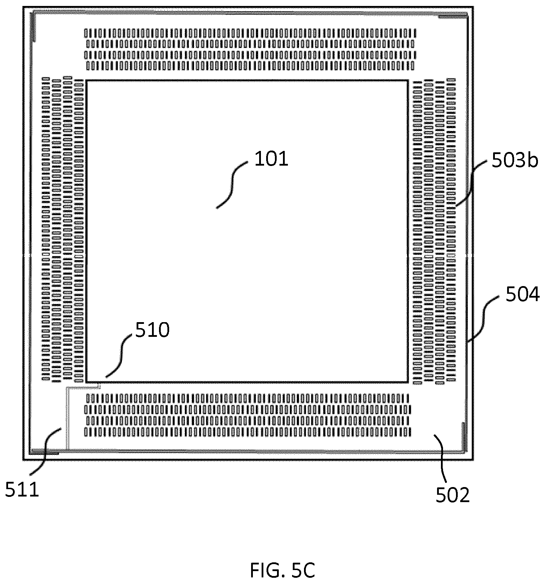

The embodiment of the first actuator 201 depicted in **Figures 5A-5C** represents a capacitive MEMS actuator based on electrostatic combs (i.e. a capacitive comb-drive MEMS actuator or, in short, comb-drive actuator 500), which in this example moves the image sensor 101 a certain distance, enabling the shift within the two optical configurations. Figures 5A and 5B respectively illustrate a lateral and a top view of the comb-drive actuator 500, image sensor 101 and microlens array 102. The comb-drive actuator 500 controls the motion of two electrically conductive combs (first comb 503a and second comb 503b) by the equilibrium between the electrostatic forces at the capacitor and the restoring force from the elasticity of one or more restoring springs 504. The comb-drive actuator 500 comprises a fixed part 501 and a moving part 502. This particular example does not intend to limit the scope of the invention, the positions of both the moving part 502 and the fixed part 501 may be exchanged, i.e. the fixed part 501 can take the position of the moving part 502 and vice-versa, so that the image sensor 101 or the microlens array 102 may be the movable element. Figure 5C depicts a top view of the comb-drive actuator 500 and the image sensor 101 without the top part of the arrangement -microlens array 102 and fixed part 501- to show the second comb 503b of the moving part 502.

In the embodiment depicted, the microlens array 102 is connected to the fixed part 501 with a hole 505 or gap and supporting means 506 for supporting the microlens array 102 over the hole 505, allowing the incident light 508 to pass through the microlens array 102 down to the image sensor 101. Since image sensors are usually rectangular, the hole 505 is also preferably rectangular, although other shapes can be used for the hole 505 to hold the microlens array 102. In other embodiments, the microlens array 102 is solidary to the fixed part 501 by other means (e.g. it may be glued, cemented, bonded or any other fixation mechanism existing in the state-of-the-art may be used). The fixed part 501 holds in place the microlens array 102 whilst allowing the image sensor 101 to be in contact (or close enough to work in the 2D imaging configuration) with the microlens array 102.

The system may comprise protection bumpers 507 arranged between the image sensor 101 and the microlens array 102 to prevent said elements coming into contact when the first actuator 201 is activated to switch to the 2D imaging configuration. The protection bumpers may be part of the first actuator 201 itself. In the embodiment of Figure 5, the first actuator 201 moves the image sensor 101 until making contact with protection bumpers 507 attached to the inner side of the perimeter around the hole 505 of the fixed part 501 holding the microlens array 102, with the purpose to minimize the possible damage caused from potential physical contacts between the microlens array 102 and the image sensor 101. The protection bumpers must allow infinitesimally small distances 107b between sensor 101 and microlens array 102. In practical terms, for example in a small plenoptic camera for mobile telephony, where the light field mode needs first distances 107a typically around tens of micrometers, the typical ranges of second distances 107b to drive the structure into the 2-dimensional imaging mode would need to go down to a few nanometers (in lenses with focal distances of tens of micrometers, if the light meets the sensor a few nanometers after crossing the microlens array there is practically no difference between the light patterns before and after the microlens array, there is no space for the light to converge towards the focal length of the lenslets composing the microlens array). The protection bumpers 507 in Figure 5A are not drawn to scale.

The image sensor 101 is attached to the moving part 502. The image sensor 101 used could be of any type (CISs, CCDs, ...) and can be connected to the rest of the imaging system by any suitable electrical interconnection means, as for example a PCB 205, a ceramic substrate, or any other suitable mean. The electrical connections between the image sensor 101 and the moving part 502 of the MEMS can be any electrical interconnect technology such as but not restricted to soldering or wire bonding 510.

The fixed part 501 and the moving part 502 of the first actuator 201 may be part of a single substrate material (e.g. a silicon substrate) built using micro-machining techniques (such as silicon micromachining) that suspend the moving part 502 over the fixed part 501 with restoring springs 504 built over the same single-substrate. It is also possible to build the moving part 502 separately from the fixed part 501 and assemble them together afterwards. The restoring springs 504 can be built as part of a single substrate including the fixed part 501, the moving part 502 and the restoring springs 304; alternatively, the restoring springs 504 can be built as part of the fixed part 501 or as part of the moving part 502. The design of these structures can be done in other forms different from what is shown in Figures 5A-5C. These kinds of structures guarantee that the distance between the moving part 502 and the fixed part 501 has a predefined value fixed by the designer, for example but not limited to, from a few microns up to several millimeters.

When the first actuator 201 is activated to switch to the light-field configuration, the distance 107 between the top of the image sensor 101 and the bottom of the microlens array 102 is preferably a distance equal to the focal length of the lenslets of the microlens array 101, although it can be larger or shorter depending on design requirements.

The restoring springs 504 have two main purposes. Firstly, to restore the position of the first element (e.g. the image sensor 101 in Figure 5) to an initial position, relative to the second element (e.g. the microlens array 102 in Figure 5), when the first actuator 201 is not activated (the initial position for instance corresponding to the light-field configuration); or, in other words, to restore the distance 107 between the image sensor 101 and the microlens array 102 to an initial distance to ensure the initial position of the system. Secondly, to guide the movement of the first element whilst keeping the lateral displacement tolerances within the required lateral displacement tolerance range, especially when the electrodes or output terminals of the first actuator 201 are not active. The lateral relative movement between the fixed part 501 and the moving part 502 in the plane XY (in Figure 5A) must be well below the size of a pixel, in a magnitude order of nanometres (e.g. 10 nm), since the microlens array 102 must be aligned to the image sensor 101 with a high precision in the X,Y axes (10 nm is a negligible misalignment as compared to the 1000 nm of a typical one micron pixel, or even 0,9 micron pixels that represent the current state of the art). However, as pixels get smaller the allowable misalignment between the microlens array 102 and the image sensor 101 will also be smaller. The alignment between sensor 101 and microlens array 102 in the angular axes (yaw, pitch and roll) is equally critical, requiring a precision of milliradians. This can be accomplished, for example, by gluing the microlens array 102 over the fixed part 501 with the alignment precision between the image sensor 101 and the microlens array 102 referred above (nanometers in the X, Y axes, milli-radians in the yaw-pitch-roll angular axes). Instead of being glued, the microlens array 102 can be suspended over a holding structure (e.g. supporting means 506) that is bonded/glued/soldered to the fixed part 501 or to a mechanical structure holding the fixed part 501.

When the comb-drive actuator 500 is activated (e.g. by an adequate voltage between the first comb 503a of the fixed part 501 and the second comb 503b of the moving part 502, and in particular between the teeth 509b of the second comb 503b of the moving part 502 and the teeth 509a of the first comb 503a of the fixed part 501), the teeth 509b of the second comb 503b of the moving part 502 are attracted to the teeth 509a of the first comb 503a of the fixed part 501, thus reducing the distance 107 between the image sensor 101 and the microlens array 102 from, as an example but not limited to, tens of micrometers to almost 0 µm (from around the focal length of the lenslets of the microlens array 102 to around 0). When the microlens array 102 is in contact (or very close) with the image sensor 101, the light diffracted by the microlens array 102 does not have enough space to converge (to be focused by the different microlenses or lenslets composing the microlens array 102) and hits the image sensor 101 as if the lenslets in the microlens array 102 were not present; in such situation, the resolution of the camera or optical system is the full-resolution of the image sensor 101.

When the actuator is not activated, the relative position between the moving part 502 and the fixed part 501 is reset to an initial position by the action of the restoring springs 504.

As depicted in Figure 5A, the following elements are arranged below the fixed part 501: an array of electrostatic tubes (the teeth 509a of the first comb 503a), electrical pads (not shown in the figures) used to connect the first 503a and second 503b combs to the driving circuitry (when the first 503a and second 503b combs are polarized with a negative voltage they attract each other), the moving part 502 containing an actuator plate, a second array of electrostatic tubes (the teeth 509b of the second comb 503b), and the restoring springs 504.

When a voltage is applied between the first comb 503a of the fixed part 501 and the second comb 503b of the moving part 502, an electrostatic force appears creating a tensile stress between the moving part 502 and the fixed part 501. An insulation layer is necessary to electrically isolate the different signal routings used to transmit the different sets of signals between sensor, the PCB and the actuator electrodes, including the sensor power supply, the sensor readings, and the power to drive the mechanical movements. The thickness of the insulation layers of the control and power wiring can be, but is not restricted to, the order of hundreds of nanometers, and the actuator electrodes can be at least but not limited to, 100 nm.

The image sensor 101 attachment and electrical connections to the moving part 502 of the first actuator 201, and the attachment and electrical connections of the fixed part 501 of the first actuator 201 to the PCB 205 (or any electrical connection to the rest of the system) can use Chip-On-Board (COB) and Wire-Bonding (WB) packaging techniques or any other bonding/soldering and electrical connection techniques. Electrical connector(s) or flex lead(s) can be used to connect the image sensor 101 to the PCB 205 and in general to the rest of the system, as for example an outside microprocessor performing operations on the data captured by the sensor. The connection of the image sensor 101 to the PCB 205 is made through electrical connections that can be performed in two separate steps. First, the sensor is bonded and electrically connected to conductive tracks over the moving part 502 (the moving part 502 can be made of a non-conductive material with metal tracks to apply voltages to the conductive comb teeth 509b, to supply power and ground signals to the sensor 101, as well as the sensor control signals and to read the values of the pixels of the sensor 101).The fixed part 501 also uses conductive tracks to achieve positive or negative voltages between the teeth 509a of the first comb 503a and the teeth 509b of the second comb 503b of the mobile part 502 and drive the movements of the first actuator 201. Electrical connections between the fixed part 501 and the moving part 502 run along the springs 504. The fixed part 501 is mechanically held and electrically connected to the system or an external system, for example through a PCB 205.

The first actuator 201 can be connected to an external system by for example bonding it to a PCB 205 using COB (Chip on Board) techniques, and the electrical connections to/from the outside world can for example use WB (wire bonding) techniques. Wire bonds can connect the electrical tracks or I/O pads of the fixed part 501 of actuator 500 and an external PCB 205. Wire bonds can also be used to connect the moving parts of actuator 500 to an external system, as for example to the PCB 205; this approach offers a higher connecting flexibility (to the fix and to the mobile parts of actuator 500) but has the handicap to have metal wire bonds under the mechanical stress of the movements of the moving part 502 of actuator 500, which might not be so tolerant to mechanical stress as the connecting tracks running along the springs 504 between the mobile part 502 and the fixed part 501 of actuator 500.

The fixed part 501, the moving part 502 and the springs 504 of actuator 500 can be manufactured over non-conductive silicon substrates. The conductive tracks for the supply of power to the sensor 101, or to the actuator teeth 509a and 509b, or to control the sensor 101 or to read the data from sensor 101, are routed as conductive tracks (made of metals or polysilicon) over the fix part 501, over the mobile part 502 and over the springs 504.

In this way, the connection of the sensor to the PCB (or to an external system in general) can be, as an example but not limited to, following the two steps just described. In a typical capacitive MEMS actuator 500 the substrates of the moving part 502 and the fixed part 501 are made of non-electrically conductive materials (for example, undoped silicon). In this case, the image sensor signals are taken from the moving part 502 to the fixed part 501 through conductive tracks 511 (see Figure 5C) that run through the restoring springs 504, as the restoring springs 504 themselves are also made of the same non-conductive material as the fixed part 501 and the moving part 502 (e.g. undoped silicon), and for example the four restoring springs 504 depicted in Figure 5C can have conductive tracks working as electrical buses, providing the electrical connections for the readings from the image sensor 101, and conveying power supply and control signals from an external system to the image sensor 101.

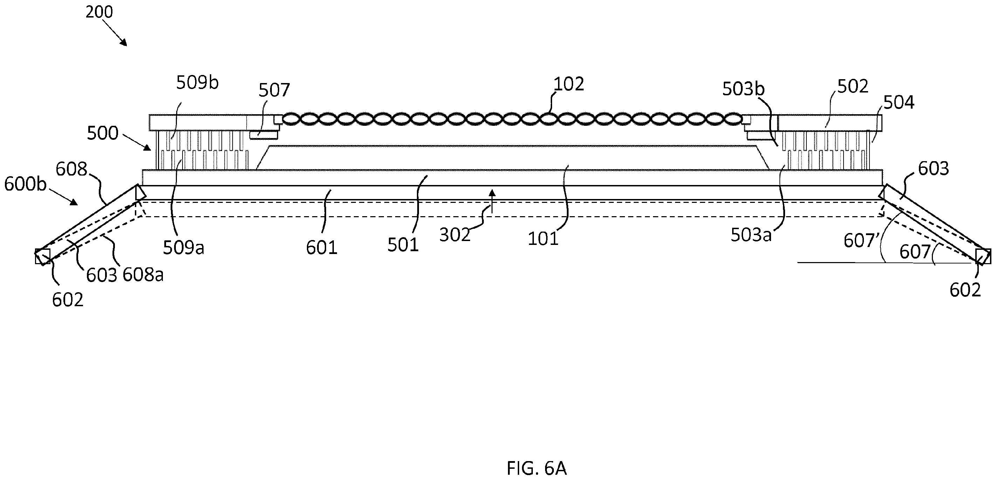

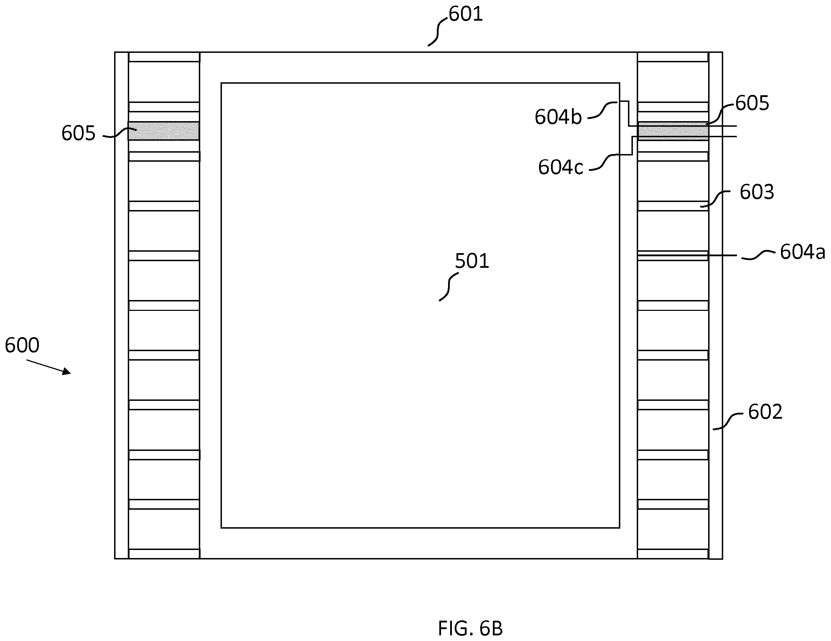

**Figures 6A-6B** show a lateral view and a top view, respectively, of an embodiment of the system 200 (wherein the main lens 103 is not depicted) including a second actuator 202 based on a thermal MEMS used to move simultaneously the image sensor 101 and the microlens array 102, this movement is independent and can be used in combination with the movement from the first actuator 201 of Figures 5A-5C (comb-drive actuator 500), but in the case of Figures 6A and 6B the fixed part 501 and moving part 502 have been swapped, in this case the moving part 502 takes down and up the microlens array 102 (instead of the sensor as in Figures 5A, 5B and 5C). In this embodiment, the thermal MEMS actuator 600 comprises a base 601 for supporting the fixed part 501 of the first actuator 201, and a plurality of holders 603 connecting two opposites sides of the base 601 with anchors 602. The holders 603 are made of a material that expands with heat and form an angle (normally higher than zero, for instance an acute angle between 15°-45°, as depicted in Figure 6A) with respect to the base 601 such that a current driven through the anchors 602 generates a thermal expansion of the holders 603 that moves the image sensor 101 and the microlens array 102 in a direction 302 perpendicular to the image sensor 101. Figure 6A depicts a first position 608a of the holders 603 before the thermal expansion and a second position 608b of the holders 603 after the thermal expansion. The initial position of the thermal MEMS actuator 600 is represented with dotted lines.

In the example of Figure 6A, the image sensor 101 is placed over the fixed part 501 of the first actuator 201, which in turn rests on the base 601 of the second actuator 202. In another embodiment, the base 601 of the second actuator 202 and the fixed part 501 of the first actuator 201 may be the same element, i.e. an element shared by both actuators. The supporting frame or base 601 of the second actuator 202 is held in place by the holders 603 with a pre-bent angle 607 that defines the buckling direction (coinciding with the direction 302 perpendicular to the optical axis in which the image sensor 101 and the microlens array 102 move together). By heating the structure in Figure 6A, the Joule effect causes the holders 603 to expand and move the base 601 and the image sensor 101 in the direction 302 perpendicular to the image sensor 101. The pre-bent angle 607 determines the direction of the movement of the base 601, changing to angle 607' after the activation of the second actuator 202.

The functioning principle of the thermal MEMS actuator 600 is the expansion and contraction of the holders 603 based on the Joule effect. According to the Joule-Lenz law, the heating power generated by an electrical conductor is proportional to the product of its resistance by the square of the current. The holders 603 can be made of, per example but not limited to, a semiconductor material allowing to increase its dimensions when heated. Holders 603 are designed to work as resistors. Thus, when a current is driven through the anchors 602, the holders 603 are heated by the Joule effect. Since the anchors 602 are fixed in place, the expansion of the holders 603 brings the base 601 and the first actuator 201, together with the image sensor 101 and the microlens array 102, in the direction 302 perpendicular to the image sensor 101, causing a change in the distance 108 between the main lens 103 and the microlens array 102. As the length and section of the material are known, the heating of the holder 603 section is adjusted through the current intensity, obtaining as a result the required elongation and the required displacement of the image sensor 101 and the microlens array 102.

The design of the holder length and the temperature to be reached through the material selection, its size, shape and pre-bent shape allow to adjust the maximum displacement of the base 601, and consequently the extreme positions (406, 408) of the microlens array 102. Figure 6B depicts a top view of the thermal MEMS actuator 600 supporting the fixed part 501 of the first actuator 201 (the rest of the elements above the fixed part 501 are not shown in the figure) and having a plurality of holders 603 equally spaced at each side of the base 601. The higher the number of holders 603, the stronger will be the resulting force of the second actuator 202, allowing to rise higher weights, increasing the robustness of the system, and minimizing the impact of possible failures of any holder.

The image sensor 101 mechanical attachment and electrical connection to the imaging system in charge of processing the data acquired, such as a PCB 205, can use Chip-On-Board (COB) and Wire Bonding (WB) packaging techniques, however other soldering/bonding/connecting techniques can be used to attach the image sensor 101 to the base 601. The image sensor 101 can be, for example but not necessarily, wire-bonded to electrical pads of the signal routings (conductive tracks deposited over the base 601, which is built with a non-conductive material). In order to conduct the electrical signals from/to the image sensor 101 to/from the imaging system, for example the PCB 205, the image sensor 101 is mechanically fixed, for example but not exclusively, by COB-techniques (gluing the sensor 101 over the fixed part 501 of the first actuator 201), as already stated, electrical connections from/to the sensor can be implemented using wire bonding techniques where the wires are placed between the input/output/supply pins of image sensor dies and at the other side of the wires connected to conductive tracks or electrical connections (604a, 604b, 604c) built over the non-conductive base 601 and which allow to create electrical connections from the PCB 205 to the first actuator 201, the image sensor 101 and the second actuator 202. Those electrical signals can be transmitted between the image sensor and an external system through special holders 605. The special holders 605 are designed to offer a much lower stiffness than the holders 603, allowing free expansion thereof and avoiding any additional mechanical stress affecting the non-uniform expansion of the special holders 605. Additionally, the special holders 605 are made from electric insulating material, preventing the voltage signals flowing on the surface of any holder 605 to cause any type of thermal activation to the second actuator 202. Thus, electrical connections from the PCB 205 to the image sensor 101 can be provided through electrical connection 604c, and from the PCB 205 to the first actuator 201 through electrical connection 604b, both connections avoiding unwanted activation of the second actuator 202.

The electrical connections of ground signals, power supply signals and control voltages to move the first and second actuators (201, 202) in an embodiment including two MEMS piled on top of each other (Figures 6A and 6B) is herein described. To provide power for the system to be functional, electrical connections to external power supplies must be taken to the sensor and to the MEMs. The electrical connections (604a, 604b, 604c) depicted in Figure 6B are used for this purpose. These electrical connections can be done with any known method, such as flex leads or tracks of conductive materials deposited over non-conductive materials. It is possible to define two or more different electrical connections for the power supply and ground voltages to enhance the system's overall functional robustness and to guarantee low impedance data paths (in Figure 6B only three electrical connections 604a, 604b and 604c are used, but the number can be much higher). The objective of these electrical connections is to provide the electrical supply voltages required by the sensor 101 and the first 201 and second 202 actuators. The electrical connections (604a, 604b, 604c) must be routed in a way in which a continuous electrical contact between the PCB and through all the actuators and the sensor is guaranteed with the minimum electrical impedance. The electrical connection 604a provide a low impedance path from the PCB through a specific number of holders 603 to the first actuator 201, the second actuator 202 and the sensor 101. The path followed by these electrical connections must be as short as possible in order to minimize voltage drops. It starts on the PCB 205 and is routed along a specific number of holders 603 to the sensor 101 or the actuators 201 and 202. These voltages can also be used to heat the structure in Figure 6A and drive the thermal expansion in the directions 302 (the more holders 603 receiving electrical power, the faster the thermal response of the thermal MEMS 600 can be). The electrical connection 604b can also be used to provide the power connectivity from the PCB 205 to the moving part 502 of the first actuator 201. The path followed by this electrical connection 604b starts on the PCB 205 and is placed along a holder 605 of the second actuator 202. From the holder 605 of the second actuator 202, the electrical connection 604b is extended to reach the fixed part 501 or the mobile part 502 of the first actuator 201. From the points drawn in Figure 6B, the electrical connections 604b are extended to power the combs 503a and/or 503b through a different connection, enabling the functionality of the comb-drive MEMS actuator 500. The electrical connection 604c can be used to enable the power connectivity from the PCB 205 to the image sensor 101, located in Figure 5A on the moving part 502 of the first actuator 201 (on in Figure 6A to the static part 501 of the first actuator 201). The path followed by this electrical connection 604c starts on the PCB 205, and runs along a holder 605 of the second actuator 202. From the holder 605 of the second actuator 202, the electrical connection 604c is extended to the fixed and/or moving parts (501, 502) of the first actuator 201. From this point, the electrical connection 604c is extended to reach the image sensor 101. The same electrical connection techniques can be used for the data signals to control the sensor from an external system or to read the sensor data (in this case instead of low impedance paths, electrical connections guaranteeing data integrity are used). Both impedance reduction techniques and data integrity techniques are well known in the design of ICs (Integrated Circuits) to provide reliable electrical connections to/from the ICs and within the ICs.

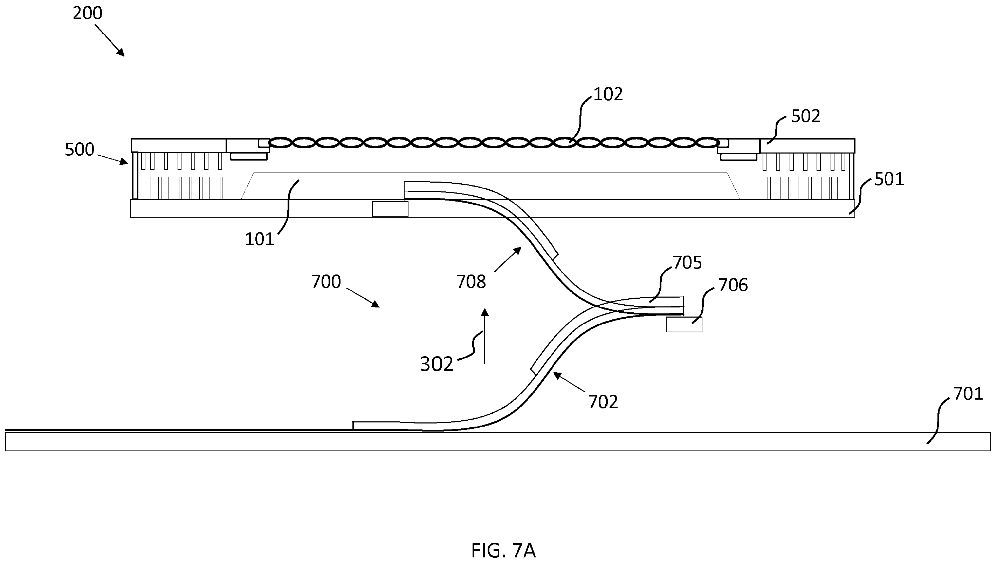

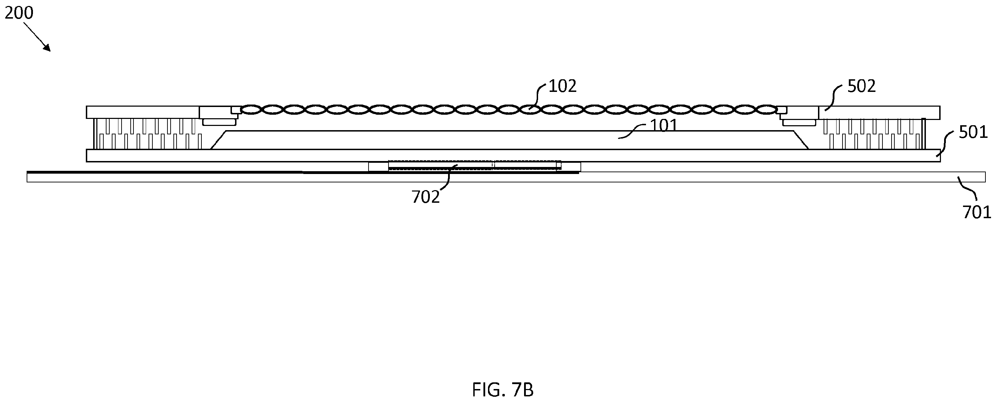

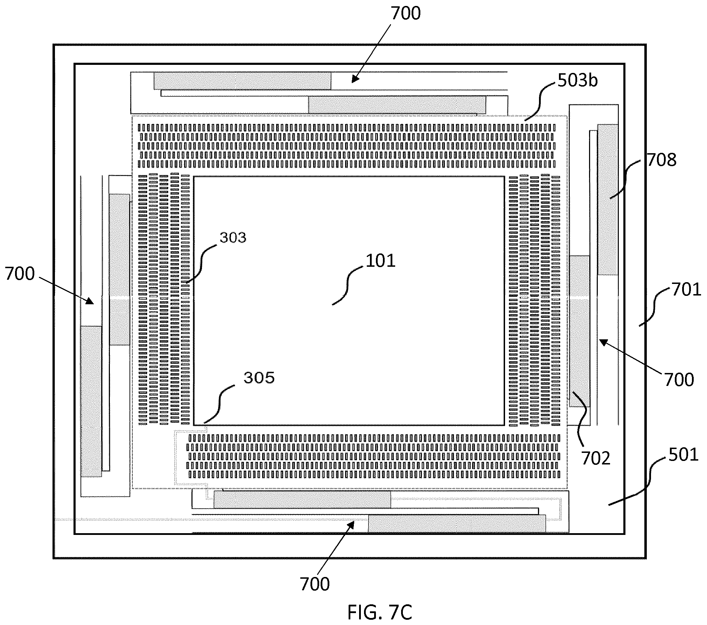

**Figures 7A-7C** show another embodiment of the system 200 including the microlens array 102, the image sensor 101 and a double actuator, first actuator 201 and second actuator 202 (the main lens 103 is not depicted in the figures). Figures 7A and 7B represent, in a lateral view, the system 200 with the second actuator 202 activated (in an extended position, Figure 7A) and in an idle or not activated position (a retracted position, in Figure 7B). In this embodiment, the first actuator 201 is the comb-drive actuator 500 of Figures 5A-5C with the fixed part 501 and moving part 502 exchanged. Figure 7C depicts a top view of the system 200 without the top elements of the arrangement - without the microlens array 102 and without the fixed part 501 that keeps in place the microlens array 102 while moving up and down the mobile part 502 of the first actuator 201-. Figure 7C also shows a top view of the second comb 503b of the moving part 502 of the first actuator 201.

The second actuator comprises a plurality of piezoelectric cantilever beams 700, each piezoelectric cantilever beam 700 comprising a first blade 702 fixed to a frame 701 at a first end and a first load 706 fixed to a second end of the first blade 702, wherein the first blade 702 comprises a piezoelectric layer 703 electrically connected to the frame 701, a passive layer 704 on top of the piezoelectric layer 703 and a layer of metallic material 705 deposited over the passive layer 703 on a region at the second end of the first blade 702. The first load 706 is connected, either directly or through additional elements (such as a second blade 708), to the fixed part 501 of the first actuator 201 such that a voltage applied to the piezoelectric layer 703 causes a movement of the image sensor 101 and the microlens array 102 in a direction 302 perpendicular to the image sensor 101 (both the image sensor 101 and the microlens array 102 move simultaneously and independently of their relative position vs each other, driven by first actuator 201). The frame 701, which is arranged parallel to the image sensor 101, may be attached to other components of the system, such as PCB 205, to convey electrical signals from/to the image sensor to/from the PCB 205 (e.g. by passing a physical connection over the blade type flexure sheet, reaching the frame 701 and, from there, the PCB 205).

Each piezoelectric cantilever beam 700 of the second actuator 202 may also comprise, as depicted in the embodiment of Figures 7A-7C, a second blade 708 fixed to the first load 706 at a first end, and a second load 707 fixed to a second end of the second blade 708 and connected to the fixed part 501 of the first actuator 201. The second blade 708 comprises the same layers of the first blade 706 (piezoelectric layer 703, passive layer 704 and a layer of metallic material 705). Each part of each blade may have different degrees of stiffness, allowing to achieve different bending modes and as a result, different values of displacement in the direction 302 perpendicular to the image sensor 101. In an embodiment, the blades have the same length in order to avoid differential vertical movements during the expansion.

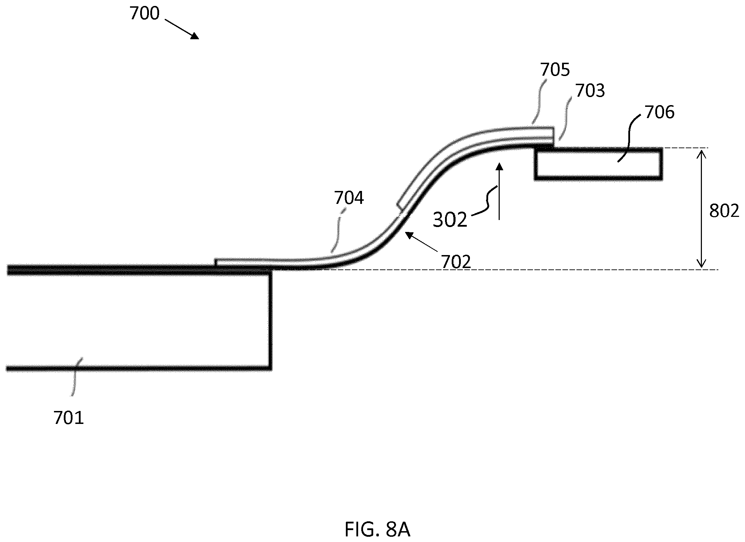

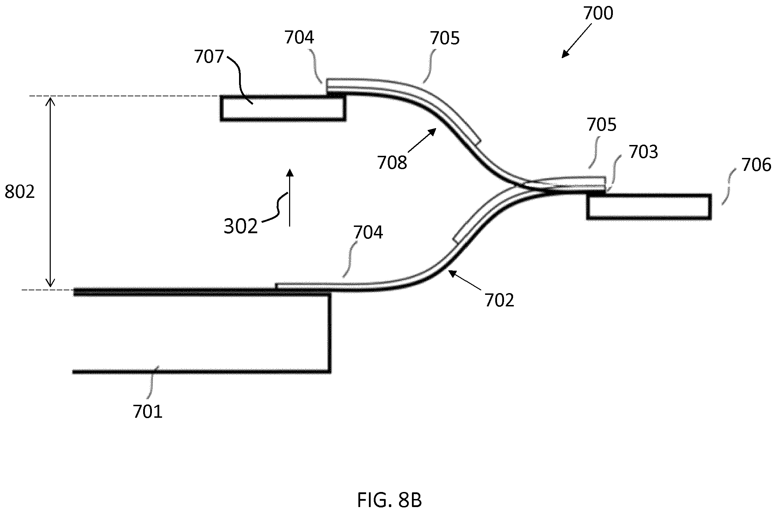

The layers of each blade are depicted in detail in **Figures 8A** and **8B****,** respectively showing a second actuator using one blade 702 or two blades (702, 708) connected in series. Each blade (702, 708) comprises a piezoelectric layer 703 mechanically and electrically connected to the frame 701, and with a passive layer 704 bounded on its top. When a voltage is applied to the piezoelectric layer 703, the piezoelectric layer 703 expands its length. As the piezoelectric layer 703 is connected to the frame 701, the movement constraint by the rigidity of the frame 701 will cause the bending of the blade (702, 708). A layer of metallic material 705 (e.g. a layer of metal such as gold) deposited over a region at the second end of the blade (e.g. half the upper part of the blade) modifies the stiffness of the composite, achieving a stiffness-controlled bend-up/bend-down blade as a result. As a load (706, 707) is mechanically fixed to the end of the blade (702, 708), and due to the different expansion of the materials, the load (706, 707) can be moved in the direction 302 perpendicular to the image sensor 101. In both examples of Figures 8A and 8B the piezoelectric cantilever beams 700 are expanded a distance (displacement 802) in the direction 302, said displacement 802 being controlled by the voltage applied to the piezoelectric layer 703 to allow the focus function. By using two nested blades (702, 708), as depicted in the example of Figure 8B, the displacement 802 in the direction 302 can be doubled (the load 707 is raised twice the distance of the load 706), assuming that the two nested blades are identical.

In the embodiment of Figures 7A-7C, the second actuator 202 comprises four piezoelectric cantilever beams 700 (shown in Figure 7C) contacting the first actuator 201 at each side of the fixed part 501 of the first actuator 201. Figure 7A depicts a first position of the piezoelectric cantilever beams 700, which are expanded a controllable distance in the direction 302, whilst Figure 7B shows a second position in which the piezoelectric cantilever beams 700 are retracted (in resting mode, with no voltage applied to the piezoelectric layer 703). This embodiment provides a better alignment to avoid unwanted tilting of the fixed part 501 of the first actuator 201 caused by the expansion and retraction of the beams, although a different number of piezoelectric cantilever beams 700 may be used (e.g. two beams on opposite sides). The movement of the fixed part 501 of the first actuator 201 in the direction 302 perpendicular to the image sensor 101 caused by the blades 702 is used to achieve the focus or autofocus functionality. The blades 702 are used to focus the camera in objects 105 located at different distances from the camera, whereas the comb-drive actuator 500 is configured to change the optical configuration of the camera between the depth-mode (or light field configuration) and the 2D full resolution camera mode (or 2D imaging configuration).

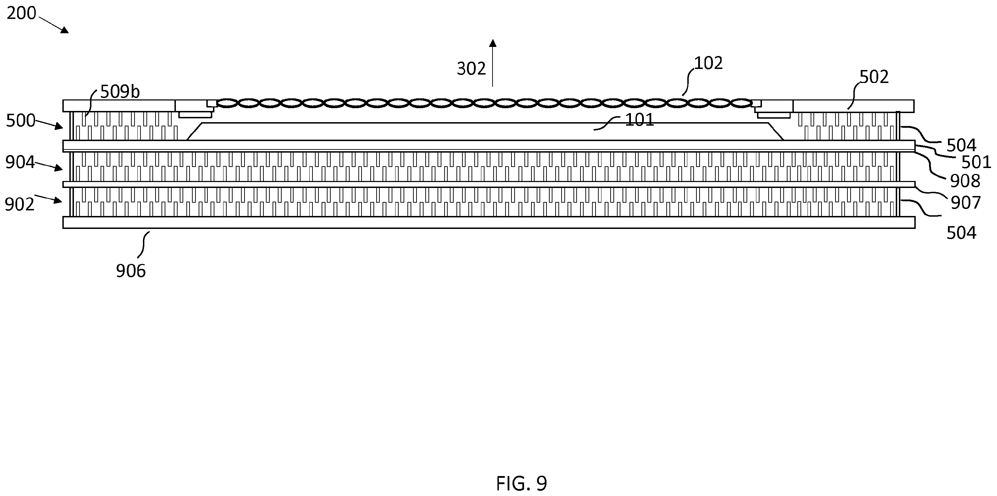

**Figure 9** shows another example of the system 200 (the main lens 103 is not depicted) including first 201 and second 202 actuators based on capacitive MEMS actuators (such as electrostatic comb-based capacitive MEMS), nesting a first actuator to change the camera mode between light-field configuration and 2D imaging configuration, and a second actuator to focus or autofocus. The first actuator 201 is implemented with a comb-drive actuator 500. The second actuator 202 may comprise at least one capacitive MEMS actuator (e.g. comb-drive actuator) connected to the fixed part 501 of the first actuator 201, and at least one restoring spring 504 configured to guide the movement of the fixed part 501 of the first actuator 201, and restore the fixed part 501 of the first actuator 201 to an initial position when the second actuator (202) is not activated. In the embodiment shown in Figure 9, the second actuator 202 is implemented by nesting two comb-drive actuators (902, 904), although a different number of comb-drive actuators (one or more actuators) may be employed.

The mechanical system in the embodiment depicted in Figure 9 is divided into two functional modules: the MEMS functional module at the top (comb-drive actuator 500) provides the relative movement of the image sensor 101 attached to a fixed part 501, and the microlens array 102 attached to the moving part 502 with the purpose to switch from the full resolution camera imaging mode to the light field mode and vice versa. The second functional module stacks several comb-drive actuators on top of each other to provide the large displacements in the direction 302 perpendicular to the image sensor 101 required to implement the focus (or autofocus) function, by nesting several moving parts on top of each other.

In this case, the first actuator 201 is a comb-drive actuator 500 as depicted in the embodiments of Figures 6A and 7A. An image sensor die (for example glued over the surface of the fixed part 501 of the first actuator 201) can be electrically connected to the PCB 205 by using wire bonding linking the I/O pads of the sensor die to conductive tracks laid-out over the surface of the fixed part 501 (however any other suitable electrical interconnection technique can be used). The conductive tracks over the surface of the MEMS can for example be taken to the outside as conductive buses over the non-conductive surface of the springs 504.

The second actuator 202 comprises a first comb-drive actuator 902 and a second comb-drive actuator 904 linked together. In turn, the second comb-drive actuator 904 is connected to the first actuator 201. The fixed part 906 of the first comb-drive actuator 902 can be glued over the PCB 205 (not shown in Figure 9), for example by using COB (Chip on Board) techniques. The PCB 205 can be for example a flex-PCB (with or without metal stiffeners to have higher rigidity or mechanical strengths). I/O pads on the surface of the fixed parts of the comb-drive actuators can be connected to the PCB 205 using WB (Wire Bonding) techniques.

The second actuator 202 adjusts the distance between the moving part 908 of the second comb-drive actuator 904 and the fixed part 906 of the first comb-drive actuator 902. All the moving parts and fixed parts are in contact by restoring springs 504, which keep the initial position at a predefined distance when no electrostatic forces are applied. Embodiment in Figure 9 shows a system 200 with one intermediate moving part 907, which correspond to the moving part of the first comb-drive actuator 902. The number of intermediate moving parts 907 may vary based on the required displacement needs, from 0 to n. This methodology allows to multiply the displacements of the mechanical system proportionally to the number of comb-drive actuators (902, 904) stacked on top of each other.

When the second actuator 202 is activated, the combs of the moving parts of the comb-drive actuators (902, 904) are attracted to their respective fixed parts. When the second actuator 202 is not activated, the moving part returns to an initial position relative to the fixed part forced by the mechanical action of the restoring springs 504.

In another example, not depicted in the figures, the second actuator 202 comprises one or more voice coil actuators (VCM, Voice Coil Motors) or any other mechanical actuator that achieves the same described results.

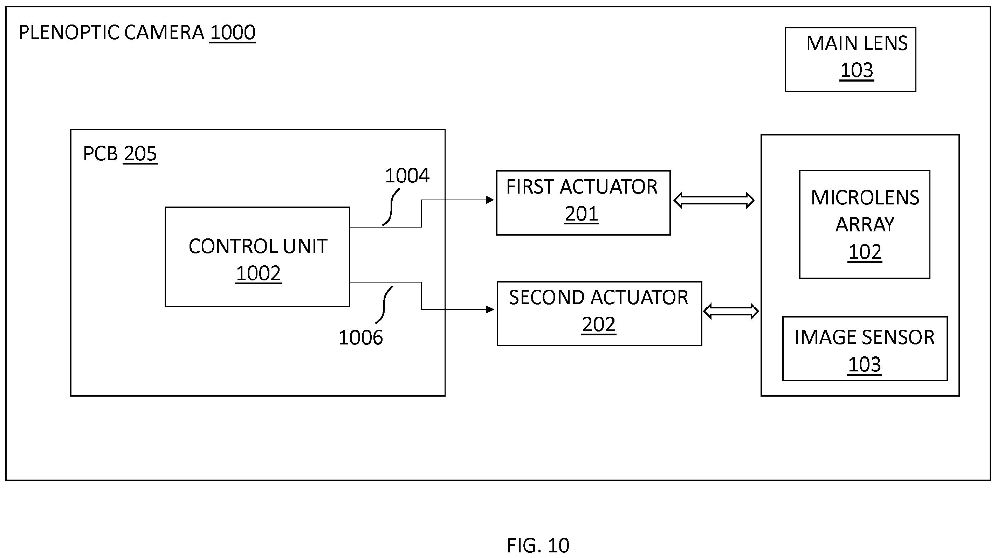

The system 200 may also comprise a control unit for controlling the activation of the first 201 and second 202 actuators. **Figure 10** represents a basic block diagram with the elements of a plenoptic camera 1000 that incorporates a light-field optical image system 200 as described in any of the previous figures. The plenoptic camera includes a control unit 1002 that may be integrated in a PCB (such as the PCB 205 depicted in Figures 2A and 2B). The control unit 1002, which can be implemented for instance as a microcontroller or any other programmable electronic control element, controls the first 201 and second 202 actuators through respective control signals (1004, 1006).

In an embodiment, the control unit 1002 is configured to activate the second actuator so that the image captured by the image sensor 101 is automatically focused when operating in a 2D imaging configuration. This autofocus function can be performed by any known means, such as by using a heuristic image analysis that, when the image is out of focus, activates the second actuator 202 to move the microlens array 102 and image sensor 101 so as to focus an area of the image; or by calculating the distance to the object 105 in the real world to decide whether the image sensor 102 should be moved closer or further to the main lens 103. In another embodiment the focus function is instead manually performed by a user, for instance by activating an input (e.g. one or more buttons) that control the activation of the second actuator 202.

The control unit 1002 may also be configured to gradually supply power to the first actuator 201 to enhance the control of the relative position of the fixed 501 and moving 502 parts of the first actuator 201, and therefore the relative position of the image sensor 101 and the microlens array 102, to avoid possible impacts of the microlens array 102 against the image sensor 101, or vice versa.

Figures 6 to 9 depict several examples combining a first actuator with a second actuator, wherein the first actuator corresponds to a comb-drive actuator 500 (as depicted for instance in Figure 5) and the second actuator can be a thermal MEMS (Figure 6), one or more piezoelectric cantilever beams (Figure 7), or one or more capacitive MEMS actuators nested in series (Figure 9). However, in other examples the first actuator (for instance, when the light-field optical image system does not have a focus function and therefore does not include a second actuator) may be also implemented as any of the embodiments of the second actuator (i.e. using a thermal MEMS as the one depicted in Figure 6, using one or more piezoelectric cantilever beams as depicted in Figure 7, or using one or more capacitive MEMS actuators nested in series, as depicted in Figure 9).

Embodiments with two actuators (201, 202), as depicted in Figure 2B, are more flexible because they make possible to change the distance 107 between the microlens array 102 and the image sensor 101, and they additionally make possible to change the distance 108 between the microlens array 102 and the main lens 103 while maintaining distance 107 unchanged at any chosen position.

Examples with only the first actuator 201, as depicted in Figure 2A, are preferred for cost sensitive applications. In this case, a preferred embodiment keeps the distance 108 between the microlens array 102 and the main lens 103 constant, focusing the area of interest of the object world over the microlens array 102 and computing depths of objects to the lens by differentiating the patterns in the image sensor 101 formed by two different situations: patterns produced by objects further than the area of interest focus before hitting the microlens array 102, and start diverging before they hit the microlens array 102; patterns produced by objects nearer than the area of interest hit the microlens array 102 before focusing, while they are still converging, producing a completely different pattern over the image sensor 101. If instead of keeping the distance 108 constant (and moving the image sensor 101 towards the microlens array 102 to adopt the 2D resolution mode) the microlens array 102 is moved towards the image sensor 101 (increasing the distance 108 while making the distance 107 close to zero to adopt the 2D resolution mode) the area of interest in the object world will focus before hitting the microlens array 102, rays will start diverging and will be defocused when reaching the microlens array 102, blurring the image of the area of interest over the microlens array 102, which is unacceptable for some applications. For this reason an embodiment that moves the image sensor 101 towards the micro lens array 102, reducing the distance 107 while keeping the distance 108 to the main lens constant, is a preferred embodiment for these applications.

## Claims

1. A light-field optical image system, comprising:
a main lens (103);
a single microlens array (102);
an image sensor (101);
a first actuator (201) configured to cause a relative displacement between the image sensor (101) and the microlens array (102) to switch between at least two different optical configurations including:
- a light-field configuration, in which the image sensor (101) and the microlens array (102) are separated by a first distance (107a) that allows the image sensor (101) to capture a light-field image; and
- a 2D imaging configuration, in which the image sensor (101) and the microlens array (102) are separated by a second distance (107b) within the range of 0-1 µm, lower than the first distance (107a), that allows the image sensor (101) to avoid a light-field effect; and
a second actuator (202) configured to move simultaneously the image sensor (101) and the microlens array (102) closer or further to the main lens (103) in a direction (302) perpendicular to the image sensor (101), while maintaining a relative distance (107) between the microlens array (102) and the image sensor (101) unchanged; wherein the first actuator (201) is configured to move a first element in a direction (302) perpendicular to the image sensor (101), the first element being the image sensor (101) or the microlens array (102);
wherein the first actuator (201) comprises a moving part attached to the first element and a fixed part (501) attached to a second element, the second element being the image sensor (101) or the microlens array (102), the second element being different from the first element;
wherein the first actuator (201) is a capacitive MEMS actuator;
and wherein the second actuator (202):
is a thermal MEMS actuator including a base (601) for supporting the fixed part (501) of the first actuator (201) and a plurality of holders (603) connecting two opposite sides of the base (601) with anchors (602), the holders (603) made of a material that expands with heat and forming an angle with respect to the base (601) such that a current driven through the anchors (602) generates a thermal expansion of the holders (603) that moves the image sensor (101) and the microlens array (102) in the direction (302) perpendicular to the image sensor (101); or
comprises a plurality of piezoelectric cantilever beams (700), each piezoelectric cantilever beam comprising a first blade (702) fixed to a frame (701) at a first end and a first load (706) fixed to a second end of the first blade (702), wherein the first blade (702) comprises a piezoelectric layer (703) electrically connected to the frame (701), a passive layer (704) on top of the piezoelectric layer (703) and a layer of metallic material (705) deposited over the passive layer (704) on a region at the second end of the first blade (702), wherein the first load (706) is connected to the fixed part (501) of the first actuator (201) such that a voltage applied to the piezoelectric layer (703) causes a movement of the image sensor (101) and the microlens array (102) in the direction (302) perpendicular to the image sensor (101).

2. The light-field optical image system of claim 1, wherein the first actuator (201) comprises at least one restoring spring (504) configured to:
guide the movement of the first element, and
restore the first element to an initial position, relative to the second element, when the first actuator (201) is not activated.

3. The light-field optical image system of claim 1, wherein each piezoelectric cantilever beam (700) of the second actuator (202) comprises a second blade (708) fixed to the first load (706) at a first end, and a second load (707) fixed to a second end of the second blade (708) and connected to the fixed part (501) of the first actuator (201).

4. The light-field optical image system of any preceding claim, further comprising at least one protection bumper (507) arranged between the image sensor (101) and the microlens array (102) to prevent said elements coming into contact when the first actuator (201) is activated to switch to the 2D imaging configuration.

5. The light-field optical image system of any preceding claim, further comprising a control unit (1002) for controlling the activation of the first (201) and second (202) actuators; wherein the control unit (1002) is configured to activate the second actuator (202) so that the image captured by the image sensor (101) is focused when operating in the 2D imaging configuration or focused over the microlens array (102) when operating in the light-field configuration.

6. The light-field optical image system of any preceding claim, wherein the first actuator (201) is further configured to cause a relative displacement between the image sensor (101) and the microlens array (102) to switch to one or more intermediate configurations in which the image sensor (101) and the microlens array (102) are separated by a distance comprised between the first distance (107a) and the second distance (107b).

## Patentansprüche

1. Optisches Lichtfeld-Bildsystem, umfassend:
eine Hauptlinse (103);
eine einzelne Mikrolinsenanordnung (102);
einen Bildsensor (101);
einen ersten Aktuator (201), der dazu konfiguriert ist, eine relative Verschiebung zwischen dem Bildsensor (101) und der Mikrolinsenanordnung (102) zu bewirken, um zwischen mindestens zwei unterschiedlichen optischen Konfigurationen umzuschalten, einschließlich:
- eine Lichtfeldkonfiguration, in der der Bildsensor (101) und die Mikrolinsenanordnung (102) durch eine erste Entfernung (107a) getrennt sind, die es dem Bildsensor (101) ermöglicht, ein Lichtfeld-Bild aufzunehmen; und
- eine 2D-Bildgebungskonfiguration, in der der Bildsensor (101) und die Mikrolinsenanordnung (102) durch eine zweite Entfernung (107b) innerhalb des Bereichs von 0-1 µm getrennt sind, die geringer ist als die erste Entfernung (107a), die es dem Bildsensor (101) ermöglicht, einen Lichtfeld-Effekt zu vermeiden; und
einen zweiten Aktuator (202), der dazu konfiguriert ist, gleichzeitig den Bildsensor (101) und die Mikrolinsenanordnung (102) näher oder weiter zu der Hauptlinse (103) in einer Richtung (302) senkrecht zu dem Bildsensor (101) zu bewegen, während eine relative Entfernung (107) zwischen der Mikrolinsenanordnung (102) und dem Bildsensor (101) unverändert beibehalten wird; wobei der erste Aktuator (201) dazu konfiguriert ist, ein erstes Element in einer Richtung (302) senkrecht zu dem Bildsensor (101) zu bewegen, wobei das erste Element der Bildsensor (101) oder die Mikrolinsenanordnung (102) ist;
wobei der erste Aktuator (201) einen beweglichen Teil, der an dem ersten Element angebracht ist, und einen feststehenden Teil (501), der an einem zweiten Element angebracht ist, umfasst, wobei das zweite Element der Bildsensor (101) oder die Mikrolinsenanordnung (102) ist, wobei das zweite Element von dem ersten Element unterschiedlich ist;
wobei der erste Aktuator (201) ein kapazitiver MEMS-Aktuator ist;
und wobei der zweite Aktuator (202):
ein thermischer MEMS-Aktuator ist, der eine Basis (601) zum Tragen des feststehenden Teils (501) des ersten Aktuators (201) und eine Vielzahl von Haltern (603) enthält, die zwei gegenüberliegende Seiten der Basis (601) mit Ankern (602) verbinden, wobei die Halter (603) aus einem Material bestehen, das sich bei Wärme ausdehnt und einen Winkel in Bezug auf die Basis (601) bildet, so dass ein durch die Anker (602) getriebener Strom eine Wärmeausdehnung der Halter (603) generiert, die den Bildsensor (101) und die Mikrolinsenanordnung (102) in der Richtung (302) senkrecht zum Bildsensor (101) bewegt; oder
eine Vielzahl von piezoelektrischen Auslegerbalken (700) umfasst, wobei jeder piezoelektrische Auslegerbalken ein erstes Blatt (702), das an einem ersten Ende an einem Rahmen (701) fixiert ist, und eine erste Last (706) umfasst, die an einem zweiten Ende des ersten Blatts (702) fixiert ist, wobei das erste Blatt (702) eine piezoelektrische Schicht (703), die elektrisch mit dem Rahmen (701) verbunden ist, eine passive Schicht (704) auf der piezoelektrischen Schicht (703) und eine Schicht aus metallischem Material (705) umfasst, die über der passiven Schicht (704) in einer Region am zweiten Ende des ersten Blatts (702) aufgebracht ist, wobei die erste Last (706) mit dem feststehenden Teil (501) des ersten Aktuators (201) verbunden ist, so dass eine an die piezoelektrische Schicht (703) angelegte Spannung eine Bewegung des Bildsensors (101) und der Mikrolinsenanordnung (102) in der Richtung (302) senkrecht zum Bildsensor (101) bewirkt.

2. Optisches Lichtfeld-Bildsystem nach Anspruch 1, wobei der erste Aktuator (201) mindestens eine Rückstellfeder (504) umfasst, die zu Folgendem konfiguriert ist:
Führen der Bewegung des ersten Elements, und
Zurückstellen des ersten Elements in eine Ausgangsposition, relativ zu dem zweiten Element, wenn der erste Aktuator (201) nicht aktiviert ist.

3. Optisches Lichtfeld-Bildsystem nach Anspruch 1, wobei jeder piezoelektrische Auslegerbalken (700) des zweiten Aktuators (202) ein zweites Blatt (708), das an einem ersten Ende an der ersten Last (706) fixiert ist, und eine zweite Last (707) umfasst, die an einem zweiten Ende des zweiten Blatts (708) fixiert und mit dem feststehenden Teil (501) des ersten Aktuators (201) verbunden ist.

4. Optisches Lichtfeld-Bildsystem nach einem der vorhergehenden Ansprüche, ferner umfassend mindestens einen Schutzpuffer (507), der zwischen dem Bildsensor (101) und der Mikrolinsenanordnung (102) angeordnet ist, um zu verhindern, dass die Elemente in Kontakt kommen, wenn der erste Aktuator (201) aktiviert wird, um in die 2D-Bildgebungskonfiguration umzuschalten.

5. Optisches Lichtfeld-Bildsystem nach einem der vorhergehenden Ansprüche, ferner umfassend eine Steuereinheit (1002) zum Steuern der Aktivierung des ersten (201) und des zweiten (202) Aktuators; wobei die Steuereinheit (1002) dazu konfiguriert ist, den zweiten Aktuator (202) zu aktivieren, so dass das von dem Bildsensor (101) aufgenommene Bild bei Betrieb in der 2D-Bildgebungskonfiguration fokussiert wird oder bei Betrieb in der Lichtfeldkonfiguration über die Mikrolinsenanordnung (102) fokussiert wird.

6. Optisches Lichtfeld-Bildsystem nach einem der vorhergehenden Ansprüche, wobei der erste Aktuator (201) ferner dazu konfiguriert ist, eine relative Verschiebung zwischen dem Bildsensor (101) und der Mikrolinsenanordnung (102) zu bewirken, um zu einer oder mehreren Zwischenkonfigurationen umzuschalten, in denen der Bildsensor (101) und die Mikrolinsenanordnung (102) durch eine Entfernung getrennt sind, die zwischen der ersten Entfernung (107a) und der zweiten Entfernung (107b) liegt.

## Revendications

1. Système optique d'imagerie à champ lumineux, comprenant :
une lentille principale (103) ;
un unique réseau de microlentilles (102) ;
un capteur d'image (101) ;
un premier actionneur (201) configuré pour provoquer un déplacement relatif entre le capteur d'image (101) et le réseau de microlentilles (102) afin de commuter entre au moins deux configurations optiques différentes comprenant :
- une configuration à champ lumineux, dans laquelle le capteur d'image (101) et le réseau de microlentilles (102) sont séparés par une première distance (107a) permettant au capteur d'image (101) de capturer une image à champ lumineux ; et
- une configuration d'imagerie 2D, dans laquelle le capteur d'image (101) et le réseau de microlentilles (102) sont séparés par une seconde distance (107b) comprise dans l'intervalle de 0 à 1 µm, inférieure à la première distance (107a), permettant au capteur d'image (101) d'éviter un effet de champ lumineux ; et
un second actionneur (202) configuré pour déplacer simultanément le capteur d'image (101) et le réseau de microlentilles (102) en les rapprochant ou en les éloignant de la lentille principale (103) dans une direction (302) perpendiculaire au capteur d'image (101), tout en maintenant inchangée une distance relative (107) entre le réseau de microlentilles (102) et le capteur d'image (101) ; dans lequel le premier actionneur (201) est configuré pour déplacer un premier élément dans une direction (302) perpendiculaire au capteur d'image (101), le premier élément étant le capteur d'image (101) ou le réseau de microlentilles (102) ;
dans lequel le premier actionneur (201) comprend une partie mobile fixée au premier élément et une partie fixe (501) fixée à un second élément, le second élément étant le capteur d'image (101) ou le réseau de microlentilles (102), le second élément étant différent du premier élément ;
dans lequel le premier actionneur (201) est un actionneur MEMS capacitif ;
et dans lequel le second actionneur (202) :
est un actionneur MEMS thermique comprenant une base (601) destinée à supporter la partie fixe (501) du premier actionneur (201) et une pluralité de supports (603) reliant deux côtés opposés de la base (601) à des ancrages (602), les supports (603) étant constitués d'un matériau qui se dilate sous l'effet de la chaleur et formant un angle par rapport à la base (601) de telle sorte qu'un courant traversant les ancrages (602) génère une dilatation thermique des supports (603) qui déplace le capteur d'image (101) et le réseau de microlentilles (102) dans la direction (302) perpendiculaire au capteur d'image (101) ; ou
comprend une pluralité de poutres en porte-à-faux piézoélectriques (700), chaque poutre en porte-à-faux piézoélectrique comprenant une première lame (702) fixée à un cadre (701) à une première extrémité et une première charge (706) fixée à une seconde extrémité de la première lame (702), dans lequel la première lame (702) comprend une couche piézoélectrique (703) électriquement connectée au cadre (701), une couche passive (704) au-dessus de la couche piézoélectrique (703) et une couche de matériau métallique (705) déposée sur la couche passive (704) sur une région située à la seconde extrémité de la première lame (702), dans lequel la première charge (706) est reliée à la partie fixe (501) du premier actionneur (201) de sorte qu'une tension appliquée à la couche piézoélectrique (703) provoque un déplacement du capteur d'image (101) et du réseau de microlentilles (102) dans la direction (302) perpendiculaire au capteur d'image (101).

2. Système optique d'imagerie à champ lumineux selon la revendication 1, dans lequel le premier actionneur (201) comprend au moins un ressort de rappel (504) configuré pour :
guider le mouvement du premier élément, et
ramener le premier élément à une position initiale, par rapport au second élément, lorsque le premier actionneur (201) n'est pas activé.

3. Système optique d'imagerie à champ lumineux selon la revendication 1, dans lequel chaque poutre en porte-à-faux piézoélectrique (700) du second actionneur (202) comprend une seconde lame (708) fixée à la première charge (706) à une première extrémité, et une seconde charge (707) fixée à une seconde extrémité de la seconde lame (708) et reliée à la partie fixe (501) du premier actionneur (201).

4. Système optique d'imagerie à champ lumineux selon l'une quelconque des revendications précédentes, comprenant en outre au moins une butée de protection (507) agencée entre le capteur d'image (101) et le réseau de microlentilles (102) afin d'empêcher lesdits éléments d'entrer en contact lorsque le premier actionneur (201) est activé pour commuter vers la configuration d'imagerie 2D.

5. Système optique d'imagerie à champ lumineux selon l'une quelconque des revendications précédentes, comprenant en outre une unité de commande (1002) destinée à commander l'activation des premier (201) et second (202) actionneurs ; dans lequel l'unité de commande (1002) est configurée pour activer le second actionneur (202) de sorte que l'image capturée par le capteur d'image (101) soit mise au point lors du fonctionnement en configuration d'imagerie 2D ou mise au point sur le réseau de microlentilles (102) lors du fonctionnement en configuration à champ lumineux.

6. Système optique d'imagerie à champ lumineux selon l'une quelconque des revendications précédentes, dans lequel le premier actionneur (201) est en outre configuré pour provoquer un déplacement relatif entre le capteur d'image (101) et le réseau de microlentilles (102) afin de commuter vers une ou plusieurs configurations intermédiaires dans lesquelles le capteur d'image (101) et le réseau de microlentilles (102) sont séparés par une distance comprise entre la première distance (107a) et la seconde distance (107b).
